# EUROPEAN PATENT SPECIFICATION

(11) **EP 1 509 832 B1**
(45) Date of publication and mention of the grant of the patent: **08.07.2009**
(21) Application number: 03752872.6
(22) Date of filing: 23.04.2003
(51) Int. Cl.: G06F 3/00

(54) **Object entry into an electronic device**
Objekteingabe in ein elektronisches Gerät
Saisie d'object dans un dispositif éléctronique

(30) Priority: 21.05.2002 EP 02076985
(43) Date of publication of application: 02.03.2005
(73) Proprietor: Koninklijke Philips Electronics N.V., 5621 BA Eindhoven (NL)
(72) Inventor: VAN LEEUWEN, Marco, NL-5656 AA Eindhoven (NL)
(74) Representative: Uittenbogaard, Frank
(86) International application number: PCT/IB2003/001710
(87) International publication number: WO 2003/098417

(56) References cited:
- EP-A- 1 168 780
- WO-A-00/57265
- GB-A- 2 332 293

## Description

The present invention relates to the field of selecting objects via an electronic device comprising a display screen, and particularly to a method and apparatus for selecting objects, such as graphical characters, via a small or portable electronic appliance, which does not have a conventional alphanumeric keyboard with discrete keys. More specifically, the invention relates to an efficient system for selecting objects from a large set of objects when the display screen real estate is relatively limited, such as on a cellular telephone, or in a personal digital assistant. The present invention also relates to a computer program product comprising software code portions for implementing the system and a method for selecting objects via a small or portable electronic appliance when said product is being run.

Recently, the proliferation of the number of small or handheld electronic appliances has brought many challenges to users, who want to efficiently enter data into such devices. For example, consider the many different types of devices, such as: personal digital assistants (PDAs) (also known as personal information managers); personal communication devices (e.g. mobile phones); laptop personal computers; multifunctional remote controls; web-tablets, to name a few, which help users store and organize or otherwise process information. Lately, the trend has been towards an ever-increasing reduction of the size of such devices. However, this reduction of size has resulted in the problem that data entry into these devices is often very difficult.

It is commonplace to provide these kinds of devices with various systems for facilitating text input. One system commonly used with mobile phones is to let each numerical key of the mobile phone represent an ordered set of up to four characters. This enables the user to input a specific character by depressing the appropriate key a number of times corresponding to the desired character. In the case of PDA's, a text entry system based on interpreting handwriting has been commonly used, often requiring the user to apply a specific writing style. Other appliances provide a virtual alphanumeric keyboard (soft keys) for character input via a touch-sensitive screen. The user selects the characters typically using a stylus.

One prior-art approach to providing a graphical text entry system has been to display a graphical-text entry-wheel on a graphical-text entry screen. A plurality of characters is positioned on the wheel. The system also includes a pointing device for rotating the wheel to allow a user to select the characters to be entered, one at the time. After selection of one or more characters, the system may provide suggestions for subsequent characters or words as aids for text entries. A system of this type is disclosed in US patent 6,011,542, issued to Sony.

EP 1 168 870 A2 discloses an apparatus for selecting an item from a predetermined set of items. The apparatus comprises a user interface comprising an input having a plurality of actuators, and an output. It further comprises control means for controlling the user interface to provide a first menu selection comprising a plurality of items not exceeding the number of actuators, and selection means responsive to operation of the actuators for selecting the item from the menu associated with the operated actuator. The control means controls the user interface to provide a further menu selection in response to selection of an item, at least one item of the further menu selection representing a subset of the selected item.

WO-A-00/57265 discloses a data entry system wherein the user can rapidly enter and search for text through a combination of entering one or more characters on a digitally displayed keyboard with a pointing device and using a search list to obtain a list of completion candidates. The user can activate the search list to obtain a list of completion candidates at any time while entering a partial text entry with the data entry system. When the search list is active, a list of completion candidates is displayed on a graphical user interface for the user to select from and the user can perform one of several actions. The user can deactivate the search list and return to modifying the current partial text entry and other text. The user can select one of the completion candidates in the search list and use the selected completion candidate to replace the partial text entry which the user is currently entering. When the user deactivates the interactive search list, the user can immediately continue adding to or modifying the current partial text entry being entered, and may re-invoke the search list to further search for completion candidates based on the modified partial text entry. In the second case, the selected completion candidate is used to replace the partial text entry that the user is currently entering, and the data entry system begins monitoring for a new partial text entry from the user.

Accordingly, it is an object of the present invention to provide an improved system for entering objects, such as graphical characters, at a small electronic appliance.

Another object of the invention is to provide an improved system for entering graphical characters into a small electronic appliance also for providing word suggestions as aids for text entries.

A further object of the invention is to provide a system for entering objects into a small electronic appliance by using small movements of a finger or stylus on a touch-sensitive screen.

Still a further object of the invention is to provide an improved system for entering objects into a small electronic appliance, wherein selection and entry of individual objects is achieved on individually selectable fields requiring only a limited amount of space to be depicted on the display screen of the small information appliance.

Yet another object of the invention is to provide a system for entering objects into a small electronic appliance, the system allowing the user to enter any individual object from a large set of objects.

Still a further object of the invention is to provide a computer program product comprising software code portions for implementing the system, and for implementing a method for entering objects into a small or portable electronic appliance when said product is run.

According to the invention a data processing system according to independent claim 1, a method according to independent claim 7 and a computer program according to independent claim 12 are provided. Favorable embodiments are defined in the dependent claims.

Further objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

In the drawings, wherein like reference characters denote similar elements throughout the several views:
Fig. 1 is a top plan view of a highest level of individually selectable fields, each of which represents a subset of objects from a larger set of objects, here illustrated as subsets of graphical characters;
Fig. 2 is a top plan view of a subordinate level of individually selectable fields, each of which represents an individual character from the subset of graphical characters represented in the fields of Fig. 1;
Fig. 3 is a top plan view illustrating selection of an individual graphical character from the characters represented at the subordinate level of individually selectable fields of Fig. 2;
Fig. 4 is a top plan view illustrating a further subordinate level of individually selectable fields, each of which represents one candidate word for entry according to a second embodiment of the present invention;
Fig. 5 is a top plan view illustrating selection of an individual word from the candidate words represented at the further subordinate level of individually selectable fields of Fig. 4;
Fig. 6 is a flow chart of the method for entering objects of the embodiment of Figs. 1 through 3; and
Fig. 7 illustrates an extension of the flow chart of Fig. 6 depicting the method for providing word suggestions as aids for text entries according to the embodiment of Figs. 4 and 5.

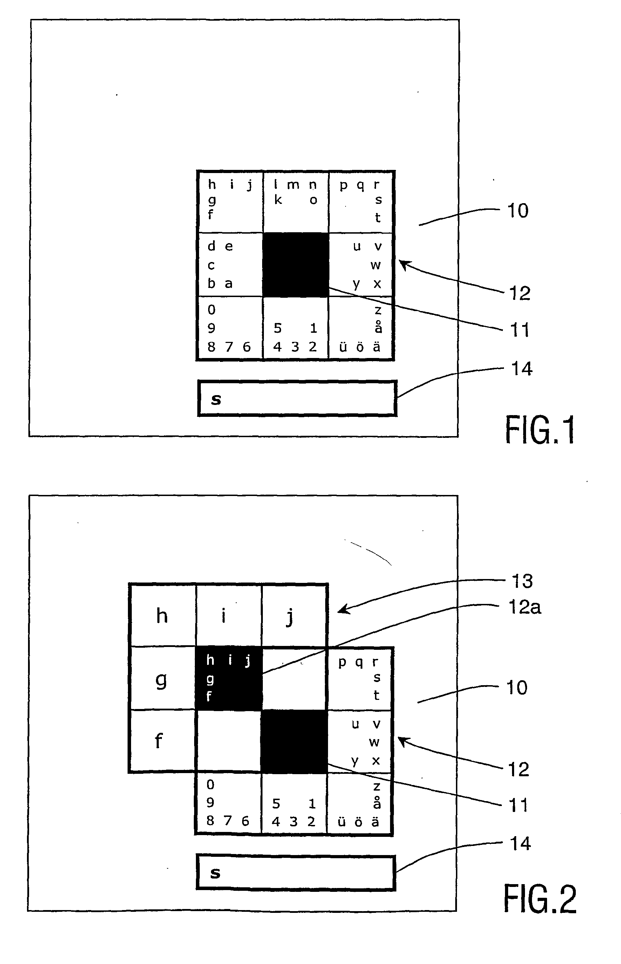

Fig. 1 shows a graphical display screen 10 displaying a top plan view of a graphical user interface system for entering objects, selected from a set of objects, into an electronic device according to an embodiment of the present invention. The screen 10 of the electronic device comprises display means. The display means may be any commonly used type of display, such as: a liquid crystal display; a plasma screen display; an electrochromic display; a cathode ray display. The display means is preferably touch-sensitive. The electronic device also comprises user input means (not shown) such as a touch-pad or touch-sensitive screen that is operated upon with a stylus and/or finger. Alternatively, user input means may be provided for use with a screen which is not touch-sensitive, such as the keys of a handset of a wireless communications system; the keys of a remote control appliance; a joystick, trackball or computer mouse, or any combination of the above. This alternative might, however, require some minor adjustments of the supporting graphics in addition to what will be described below.

For ease of understanding, the current embodiment will be described with reference to an electronic device comprising a touch-sensitive display screen with which the user interacts through a stylus and/or the user's finger. The interaction provides user input to the electronic device by means of performing operations at the graphical user interface of the object entry system.

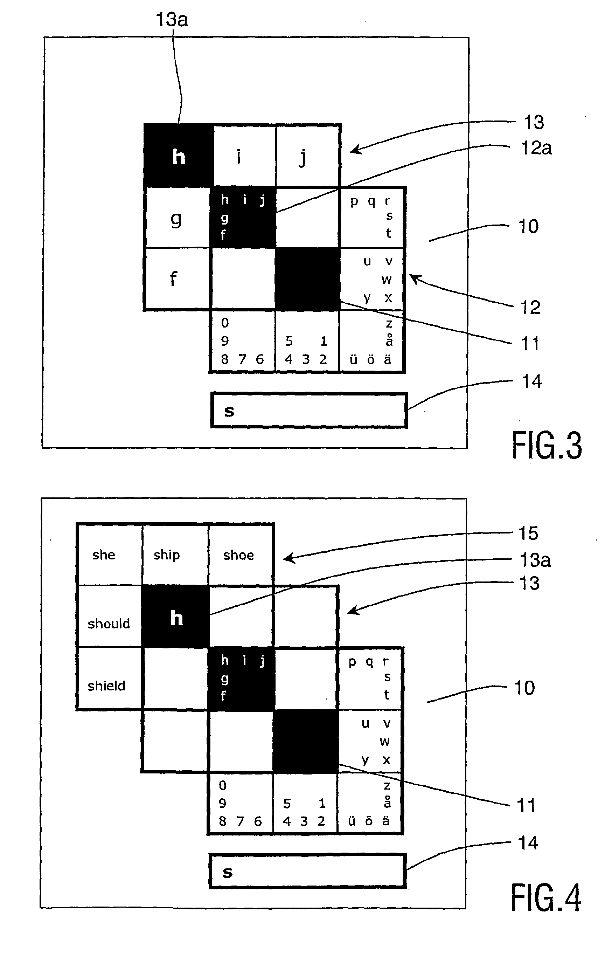

When the user positions the stylus and/or finger, hereinafter referred to as pointer, at a location on the screen 10, the display means determines this first pointer position 11 and displays a first plurality of individually selectable fields 12 representing a top level of the graphical user interface. The fields 12 are displayed surrounding the first pointer position 11. As shown in Fig. 1, these fields 12 are represented as rectangular or square boxes, but could alternatively take any suitable form or shape, such as circular, triangular or circle sectors. Each of these fields 12 represents a subset of objects from a larger set of objects. For ease of understanding, the objects are here illustrated as graphical characters from a larger set of characters, e.g., as shown in Fig. 1, the alphabet from a to z and some additional country-specific characters. It is, however, intended that the objects may be objects from other kinds of data collections, e.g., a set of data representing contact information of individual persons (as in a telephone list), or a top level folder, containing any number of subordinate folders with either further subordinate folders or individually selectable objects representative of items or functions, which are accessible through the user interface of the electronic device. The input means is then operative to allow movement of the pointer to any of the first individually selectable fields 12. This is accomplished through the user moving the pointer, kept in contact with the touch-sensitive screen 10, to the field representing the desired subset of characters. This desired subset is illustrated in Fig. 2 as the blackened field 12a containing the characters f through j, for performing a selection of the indicated field. When this selection has been performed, said display means is operative to generate a new view wherein a selected field is surrounded by an additional plurality of individually selectable fields 13. Each of fields 13 represents either an individual character or a further subset of characters (not shown) from the subset of graphical characters represented in the previously selected field. Again, movement of the pointer is allowed, kept in contact with the touch-sensitive screen, to any of the additional individually selectable fields 13 until the additional field selected represents an individual character. The selected character is illustrated in Fig. 3 as the blackened field 13a containing the character "h". In this manner, any number of subordinate levels of individually selectable fields can be provided, even if the embodiment, shown here as an example, has only one subordinate level.

As shown in Fig. 2, only those fields contain a character and are therefore selectable, which are displayed as non-overlaid with the fields of the first plurality of fields 12. It is of course possible to allocate characters to all additional fields 13. The way of presenting the characters in the embodiment shown here, however, is preferred, as this facilitates maintaining an overview of the graphical user interface by the user. This also allows the user to perform a reverse movement of the pointer to the previous level to invalidate a performed selection. As an alternative, all fields but one of a previous level could be removed completely, which would still provide help in performing this reverse movement. As still a further alternative all previous level fields could be removed and replaced with an indication of a move direction for assisting the user in returning to a previous level. The input means is further operative to allow entering of the graphical character, represented in the selected additional field 13a, through the user lifting the pointer from the touch-sensitive screen. Upon lifting, the graphical character selected is entered into a text entry field 14 of the graphical user interface and the displayed fields are removed. The text entry field 14 of Figs. 1 to 3 as illustrated contains a previously entered character, here illustrated as the character "s", for the purpose of facilitating the following description. Upon the user lifting the pointer from the touch-sensitive screen, illustrated in Fig. 3, the character "h" is entered into the text entry field 14 after the character "s".

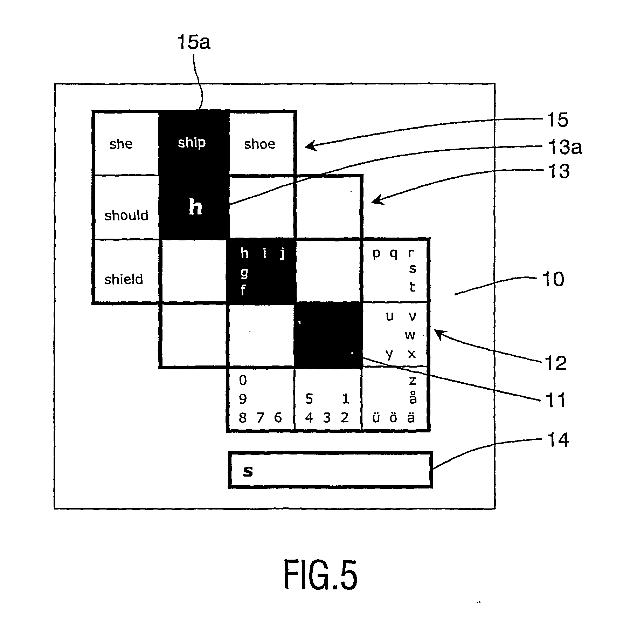

According to a further embodiment of the system in the invention, the system provides word suggestions as aids for text entries. In addition to what has been described with reference to Figs. 1, 2 and 3, the system according to this second embodiment further comprises dictionary storage means (not shown), such as any conventional type of memory, e.g. RAM-memory circuits, ROM-memory circuits, a magnetic memory device (such as a hard-disk drive) or an optical memory device (such as a CD-ROM or DVD drive). The dictionary storage means stores a plurality of candidate words. The system further comprises retrieval means (not shown) for retrieving a subset of candidate words from the dictionary storage means. The retrieval means preferably comprises a microprocessor and software code portions for performing the retrieval process when executed on said microprocessor. The subset of candidate words is retrieved on the basis of either the character represented in the selected additional field or the combination of the character represented in the selected additional field and at least one previously entered character, as illustrated by the character "s" in the text entry field 14 of Figs. 1, 2 and 3. After said subset of candidate words has been retrieved, the display means displays a further plurality 15 of individually selectable fields surrounding the selected additional field 13a and representing a further subordinate level of the graphical user interface. Each of the further individually selectable fields 15 represents one candidate word from the subset of candidate words. The input means allows movement of the pointer to any of the further individually selectable fields 15 through the user moving the pointer, kept in contact with the touch-sensitive screen 10, to the field representing the desired candidate word. The desired candidate word is illustrated in Fig. 5 as the blackened field 15a containing the word "ship", for performing a selection of the indicated further field. The input means allows entering the candidate word, represented in the selected further field 15a, through the user lifting the pointer from the touch-sensitive screen 10. This then causes the selected candidate word to be entered into the text entry field 14 of the graphical user interface, while replacing the previously entered character, shown as the character "s" in Fig. 5.

In both of the above embodiments, the input means allows reverse movement of the pointer through the user moving the pointer, kept in contact with the touch-sensitive screen, from a currently selected field to a previous pointer position for invalidating a performed selection. Upon such invalidation, presentation of any fields initiated through the previous selection is cancelled.

As illustrated in Figs. 1 and 2, the display means of this embodiment displays the individual characters, represented in the additional plurality of individually selectable fields, with an enlarged font size as compared to the font size of the subset of graphical characters represented in the first plurality of individually selectable fields. In an alternative embodiment (not shown), the same font size could be used to present all characters.

In yet a further embodiment (not shown), in order to facilitate the user's overview of the user interface, the display means provides a magnified version of the additional plurality of individually selectable fields 13. This is effected in response to using the input means to initiate movement of the pointer towards any of the additional individually selectable fields 13.

As illustrated by the embodiment of Figs. 1 to 3, the display means displays the additional plurality of individually selectable fields 13 as being at least partially overlaid with the previously displayed first plurality of individually selectable fields 12.

In yet a further embodiment (not shown) the system for entering objects from a set of objects into an electronic device is accommodated in a handset of a wireless communication system, such as a mobile phone. In this embodiment, as an alternative to display 10 not being touch-sensitive, pointer movement and entry could be controlled by the user depressing designated keys from the plurality of keys commonly occurring on such devices.

Instead of being housed in the handset of a wireless communication system, the system for entering objects from a set of objects into an electronic device may be accommodated in a personal digital assistant, a remote control appliance or any type of handheld electronic device. Depending on the characteristics of the device pointer, movement could be effected by the user using alternative input means, such as the keys (e.g., of a of a remote control appliance); a joystick, trackball or computer mouse; a stylus or user's finger in combination with a touch-pad or touch-sensitive screen; or any combination of the above.

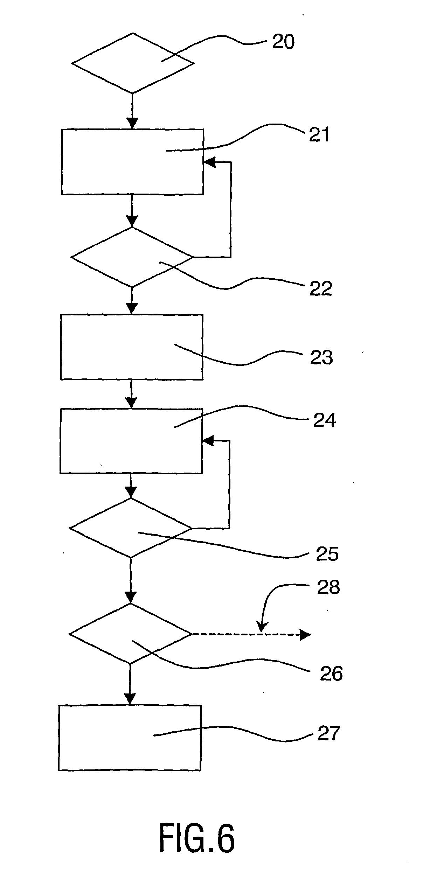

Fig. 6 is a flow chart of the method for entering objects from a set of objects, here illustrated as graphical characters from a character set, into an electronic device according to an embodiment of the present invention.

In order to begin entering graphical characters into the electronic device, the user initiates the input process. In the embodiment described above, this is accomplished by the user placing the point of the pointer on the touch-sensitive screen. In other embodiments, initiation can be accomplished in any number of ways, e.g., simply by turning-on the device or by pressing a dedicated key on the device, or by touching a dedicated area on a touch-sensitive screen or touch-pad, etc.

Upon determining that the user has initiated the input process (step 20), the system determines a first pointer position and displays on the display a first plurality of individually selectable fields, surrounding the first pointer position. Each of the fields represents a subset of graphical characters from the character set (step 21). Thereafter, it is determined if the user has entered commands for moving the pointer to any of the first individually selectable fields for selection of the indicated field (step 22). The selected field is then highlighted (step 23).

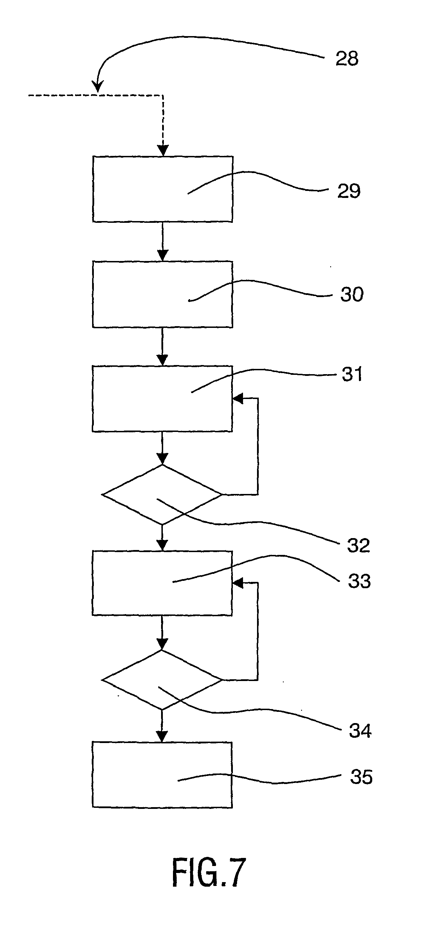

Once this is done, the system changes to displaying on the display an additional plurality of individually selectable fields (step 24) surrounding a selected field. Each of the additional fields represents either an individual character or a further subset of characters from the subset of graphical characters represented in the previously selected field. The system determines if the user has entered commands for moving the pointer to any of the additional individually selectable fields for selection and highlights the indicated additional field (step 25). In operational use of the system, this process continues until the additional field last selected represents an individual graphical character. It is thereafter determined if the user has entered commands for entering the graphical character represented in the selected additional field (step 26). If so, the selected graphical character is entered into a text entry field of the graphical user interface (step 27) and the displayed fields are removed. Also envisaged is a further enhanced embodiment for providing word suggestions as aids for text entries. This is being illustrated in Fig. 7, the flow chart of which is coupled to the flow chart of Fig. 6 through the broken-line arrow 28.

Referring to Fig. 7, consider the scenario wherein the user has not entered commands for entering the graphical character represented in the selected additional field. The process flow is then continued via the broken-line arrow 28 as follows. Dictionary storage means that stores a plurality of candidate words is accessed (step 29), and a subset of candidate words is retrieved from the dictionary storage means based either on the character represented in the selected additional field, or on the combination of the character represented in the selected additional field and at least one previously entered character (step 30). Thereafter, the system displays on the display a further plurality of individually selectable fields surrounding the selected additional field. Each of the further plurality of fields represents one candidate word from the subset of candidate words (step 31). As a next step it is determined if the user has entered commands for moving the pointer to any of the further individually selectable fields for performing a selection of the indicated further field (step 32). If so, this field is then highlighted (step 33). It is thereafter determined if the user has entered commands for an entering the candidate word represented in the selected further field (step 34). If so, this word is then entered into a text entry field of the graphical user interface (step 35), replacing any previously entered character(s) used for retrieving the candidate words.

Thus, while fundamental novel features of the invention as applied to a preferred embodiment thereof have been shown, described and pointed out, it will be understood that various omissions and substitutions and changes in the form and details of the devices illustrated, and in their operation, may be made by those skilled in the art. For example, it is expressly intended that all combinations of those elements and/or method steps, which perform substantially the same function in substantially the same way to achieve the same results, be within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the appended claims.

## Claims

1. A data processing system for selecting an object from a set of objects,
wherein:
- the system comprises display means and input means;
- the display means is operative to display a first sub-set (12) of the objects;
- the input means is operative to determine a position of a pointer with respect to the first sub-set of the objects, for in dependence on the position causing the display means to display a second sub-set (13) of the objects that corresponds with the position of the pointer and that represents a subset of objects of the first sub-set, and
- the input means allows moving the pointer for selecting a specific object (12a) of the first sub-set and/or for selecting a particular one (13a) of the second sub-set of the objects,
- the pointer is moveable on the display means with respect to the first sub-set (12) of the objects and the display means is operative to display the second sub-set (13) of the objects surrounding the specific one (12a) of the first sub-set of the objects that corresponds with the position of the pointer, wherein said display means is operative to display at least one of the first sub-set of the objects (12) when it displays the second subset (13) of the objects.

2. The system of claim 1 wherein said input means is operative to allow reverse movement of the pointer from a currently selected object to a previous pointer position for annulling a performed selection.

3. The system of claim 1, wherein the set of objects comprises a collection of graphical characters.

4. The system of claim 3, wherein the graphical characters comprise alphabetic characters, and wherein:
- the system comprises dictionary storage means for storing a plurality of candidate words;
- the system comprises retrieval means for retrieving a subset of the candidate words from the dictionary storage means based either on a particular one of the alphabetic characters last selected or on the particular alphabetic character last selected and at least a further one of the alphabetic characters selected previously;
- the display means is operative to display said sub-set (15) of the candidate words that are individually selectable and surrounding the alphabetic character (13a) last selected;
- the input means is operative to allow movement of the pointer to any of the further plurality of the candidate words for selecting a specific one (15a) thereof.

5. The system of claim 1, wherein the display means displays the second subset (13) in an arrangement at least partially overlaying the first sub-set (12).

6. Handheld electronic device comprising a system according to any of the claims 1-5.

7. A method of selecting an object from a set of objects, using display means operative to display a first sub-set of the objects, the method comprising:
- determining a position of a pointer with respect to the first sub-set (12) of the objects;
- in dependence on the position causing the display means to display a second sub-set (13) of the objects that corresponds with the position of the pointer, and that represents a subset of objects of the first sub-set and
- allowing moving the pointer for selecting a specific object (12a) of the first sub-set and/or for selecting a particular one (13a) of the second sub-set of the objects
wherein the pointer is moveable on the display means with respect to the first sub-set (12) of the objects and the display means is caused to display the second sub-set (13) of the objects surrounding the specific one (12a) of the first sub-set of the objects that corresponds with the position of the pointer, wherein said display means displays at least one of the first sub-set of the objects (12) when it displays the second subset (13) of the objects.

8. The method of claim 7 wherein the step of allowing the moving of the pointer further allows reverse movement of the pointer from a currently selected object to a previous pointer position for annulling a performed selection.

9. The method of claim 7 wherein the set of objects comprises a collection of graphical characters.

10. The method of claim 9, wherein the graphical characters comprise alphabetic characters, and wherein the method comprises:
- having available a plurality of candidate words stored in dictionary storage means;
- retrieving a subset of the candidate words based either on a particular one of the alphabetic characters last selected or on the particular alphabetic character last selected and at least a further one of the alphabetic characters selected previously;
- causing to display a plurality (15) of the candidate words that are individually selectable and as centered on the alphabetic character (13a) last selected; and
- allowing movement of the pointer to any of said sub-set of the candidate words for selecting a specific one (15a) thereof.

11. The method of claim 7 comprising causing to display the second subset (13) in an arrangement at least partially overlaying the first sub-set (12).

12. A computer program product comprising software code for implementing on a data processing system a method of selecting an object from a set of objects, using display means operative to display a first sub-set (12) of the objects, the software code being operative to:
- determine a position of a pointer with respect to the first sub-set (12) of the objects;
- in dependence on the position cause the display means to display a second sub-set (13) of the objects that corresponds with the position of the pointer and that represents a subset of objects of the first sub-set; and
- allow moving the pointer for selecting a specific object (12a) of the first sub-set and/or for selecting a particular one (13a) of the second sub-set of the objects
wherein the pointer is moveable on the display means with respect to the first sub-set (12) of the objects and the software code is operative to cause the display means to display the second sub-set (13) of the objects surrounding the specific one (12a) of the first sub-set of the objects that corresponds with the position of the pointer, wherein the software code is operative to cause the display means to display at least one of the first sub-set of the objects (12) when it displays the second subset (13) of the objects.

13. The computer program product of claim 12 wherein the software code is operative to allow reverse movement of the pointer from a currently selected object to a previous pointer position for annulling a performed selection.

14. The computer program product of claim 12 wherein the set of objects comprises a collection of graphical characters.

15. The computer program product of claim 14, wherein the graphical characters comprise alphabetic characters, and wherein the software code is operative to:
- have access to a plurality of candidate words stored in dictionary storage means;
- retrieve a subset of the candidate words based either on a particular one of the alphabetic characters last selected or on the particular alphabetic character last selected and at least a further one of the alphabetic characters selected previously;
- cause to display said sub-set of the candidate words (15) that are individually selectable and surrounding the alphabetic character (13a) last selected; and
- allow movement of the pointer to any of the plurality of the candidate words for selecting a specific one (15a) thereof.

16. The computer program product of claim 12 operative to cause to display the second subset (13) in an arrangement at least partially overlaying the first sub-set (12).

17. The computer program product of claim 12 for use on a handheld electronic device.

## Patentansprüche

1. Datenverarbeitungssystem zum Auswählen eines Objekts aus einem Satz von Objekten, wobei
- das System Anzeigemittel und Eingabemittel umfasst;
- die Anzeigemittel so wirkend sind, dass sie einen ersten Subsatz (12) der Objekte anzeigen;
- die Eingabemittel so wirkend sind, dass sie eine Position eines Zeigers gegenüber dem ersten Subsatz der Objekte ermitteln, um zu bewirken, dass die Anzeigemittel in Abhängigkeit der Position einen zweiten Subsatz (13) der Objekte anzeigen, welcher der Position des Zeigers entspricht und welcher einen Subsatz von Objekten des ersten Subsatzes darstellt; und
- die Eingabemittel ein Verschieben des Zeigers zwecks Auswählens eines spezifischen Objekts (12a) des ersten Subsatzes und/oder zwecks Auswählens eines bestimmten Objekts (13a) des zweiten Subsatzes der Objekte ermöglichen;
- der Zeiger auf den Anzeigemitteln gegenüber dem ersten Subsatz (12) der Objekte verschiebbar ist und die Anzeigemittel so wirkend sind, dass sie den das spezifische Objekt (12a) des ersten Subsatzes der Objekte umgebenden, zweiten Subsatz (13) der Objekte anzeigen, welcher der Position des Zeigers entspricht, wobei die Anzeigemittel so wirkend sind, dass sie bei Anzeigen des zweiten Subsatzes (13) der Objekte mindestens ein Objekt des ersten Subsatzes der Objekte (12) anzeigen.

2. System nach Anspruch 1, wobei die Eingabemittel so wirkend sind, dass sie eine Rückwärtsbewegung des Zeigers von einem aktuell ausgewählten Objekt zu einer vorherigen Zeigerposition ermöglichen, um eine vorgenommene Auswahl aufzuheben.

3. System nach Anspruch 1, wobei der Satz von Objekten eine Sammlung von graphischen Zeichen umfasst.

4. System nach Anspruch 3, wobei die graphischen Zeichen alphabetische Zeichen umfassen und wobei:
- das System Wörterbuchspeichermittel zur Speicherung einer Mehrzahl von Kandidatenwörtem umfasst;
- das System Abrufmittel umfasst, um aufgrund eines bestimmten der zuletzt ausgewählten, alphabetischen Zeichen oder des bestimmten, zuletzt ausgewählten, alphabetischen Zeichens sowie mindestens eines weiteren, zuvor ausgewählten, alphabetischen Zeichens, einen Subsatz der Kandidatenwörter aus den Wörterbuchspeichermitteln abzurufen;
- die Anzeigemittel so wirkend sind, dass sie den Subsatz (15) der Kandidatenwörter anzeigen, die individuell wählbar sind und das zuletzt gewählte, alphabetische Zeichen (13a) umgeben;
- die Eingabemittel so wirkend sind, dass sie eine Verschiebung des Zeigers zu jedem der Mehrzahl der Kandidatenwörter ermöglichen, um ein spezifisches (15a) derselben auszuwählen.

5. System nach Anspruch 1, wobei die Anzeigemittel den zweiten Subsatz (13) in einer dem ersten Subsatz (12) zumindest teilweise überlagerten Anordnung anzeigen.

6. Elektronisches Handgerät mit einem System nach einem der Ansprüche 1-5.

7. Verfahren zum Auswählen eines Objekts aus einem Satz von Objekten unter Verwendung von Anzeigemitteln, die so wirkend sind, dass sie einen ersten Subsatz der Objekte anzeigen, wobei das Verfahren die folgenden Schritte umfasst:
- Ermitteln einer Position eines Zeigers gegenüber dem ersten Subsatz (12) der Objekte;
- Bewirken, dass die Anzeigemittel in Abhängigkeit der Position einen zweiten Subsatz (13) der Objekte anzeigen, welcher der Position des Zeigers entspricht und welcher einen Subsatz von Objekten des ersten Subsatzes darstellt; sowie
- Ermöglichen einer Verschiebung des Zeigers zwecks Auswählens eines spezifischen Objekts (12a) des ersten Subsatzes und/oder zwecks Auswählens eines bestimmten Objekts (13a) des zweiten Subsatzes der Objekte,
wobei der Zeiger auf den Anzeigemitteln gegenüber dem ersten Subsatz (12) der Objekte verschiebbar ist und bewirkt wird, dass die Anzeigemittel den das spezifische Objekt (12a) des ersten Subsatzes der Objekte umgebenden, zweiten Subsatz (13) der Objekte anzeigen, welcher der Position des Zeigers entspricht, wobei die Anzeigemittel bei Anzeigen des zweiten Subsatzes (13) der Objekte mindestens ein Objekt des ersten Subsatzes der Objekte (12) anzeigen.

8. Verfahren nach Anspruch 7, wobei der Schritt des Ermöglichens der Verschiebung des Zeigers weiterhin eine Rückwärtsbewegung des Zeigers von einem aktuell ausgewählten Objekt zu einer vorherigen Zeigerposition ermöglicht, um eine vorgenommene Auswahl aufzuheben.

9. Verfahren nach Anspruch 7, wobei der Satz von Objekten eine Sammlung von graphischen Zeichen umfasst.

10. Verfahren nach Anspruch 9, wobei die graphischen Zeichen alphabetische Zeichen umfassen, und wobei das Verfahren die folgenden Schritte umfasst:
- Zugreifen auf eine Mehrzahl von in Wörterbuchspeichermitteln gespeicherten Kandidatenwörtem;
- Abrufen eines Subsatzes der Kandidatenwörter aufgrund eines bestimmten der zuletzt ausgewählten, alphabetischen Zeichen oder des bestimmten, zuletzt ausgewählten, alphabetischen Zeichens sowie mindestens eines weiteren, zuvor ausgewählten, alphabetischen Zeichens;
- Bewirken der Anzeige einer Mehrzahl (15) der Kandidatenwörter, die individuell wählbar und auf dem zuletzt gewählten, alphabetischen Zeichen (13a) zentriert sind; sowie
- Ermöglichen einer Verschiebung des Zeigers zu jedem Subsatz der Kandidatenwörter, um ein spezifisches (15a) derselben auszuwählen.

11. Verfahren nach Anspruch 7, welches den Schritt des Bewirkens der Anzeige des zweiten Subsatzes (13) in einer dem ersten Subsatz (12) zumindest teilweise überlagerten Anordnung umfasst.

12. Computerprogrammprodukt mit Software-Code, um auf einem Datenverarbeitungssystem ein Verfahren zum Auswählen eines Objekts aus einem Satz von Objekten unter Verwendung von Anzeigemitteln zu implementieren, die so wirkend sind, dass sie einen ersten Subsatz (12) der Objekte anzeigen, wobei der Software-Code so wirkend ist, dass
- eine Position eines Zeigers gegenüber dem ersten Subsatz (12) der Objekte ermittelt wird;
- in Abhängigkeit der Position bewirkt wird, dass die Anzeigemittel einen zweiten Subsatz (13) der Objekte anzeigen, welcher der Position des Zeigers entspricht und welcher einen Subsatz von Objekten des ersten Subsatzes darstellt, und
- eine Verschiebung des Zeigers zwecks Auswählens eines spezifischen Objekts (12a) des ersten Subsatzes und/oder zwecks Auswählens eines bestimmten Objekts (13a) des zweiten Subsatzes der Objekte ermöglicht wird,
wobei der Zeiger auf den Anzeigemitteln gegenüber dem ersten Subsatz (12) der Objekte verschiebbar und der Software-Code so wirkend ist, dass er bewirkt, dass die Anzeigemittel den das spezifische Objekt (12a) des ersten Subsatzes der Objekte umgebenden, zweiten Subsatz (13) der Objekte anzeigen, welcher der Position des Zeigers entspricht, wobei der Software-Code so wirkend ist, dass er bewirkt, dass die Anzeigemittel bei Anzeigen des zweiten Subsatzes (13) der Objekte mindestens ein Objekt des ersten Subsatzes der Objekte (12) anzeigen.

13. Computerprogrammprodukt nach Anspruch 12, wobei der Software-Code so wirkend ist, dass er eine Rückwärtsbewegung des Zeigers von einem aktuell ausgewählten Objekt zu einer vorherigen Zeigerposition ermöglicht, um eine vorgenommene Auswahl aufzuheben.

14. Computerprogrammprodukt nach Anspruch 12, wobei der Satz von Objekten eine Sammlung von graphischen Zeichen umfasst.

15. Computerprogrammprodukt nach Anspruch 14, wobei die graphischen Zeichen alphabetische Zeichen umfassen, und wobei der Software-Code so wirkend ist, dass:
- Zugriff auf eine Mehrzahl von in Wörterbuchspeichermitteln gespeicherten Kandidatenwörtem erlangt wird;
- ein Subsatz der Kandidatenwörter aufgrund eines bestimmten der zuletzt ausgewählten, alphabetischen Zeichen oder des bestimmten, zuletzt ausgewählten, alphabetischen Zeichens sowie mindestens eines weiteren, zuvor ausgewählten, alphabetischen Zeichens abgerufen wird;
- eine Anzeige des Subsatzes der Kandidatenwörter (15), die individuell wählbar sind und das zuletzt gewählte, alphabetische Zeichen (13a) umgeben, bewirkt wird, und
- eine Verschiebung des Zeigers zu jedem der Mehrzahl der Kandidatenwörter ermöglicht wird, um ein spezifisches (15a) derselben auszuwählen.

16. Computerprogrammprodukt nach Anspruch 12, welches so wirkend ist, dass eine Anzeige des zweiten Subsatzes (13) in einer dem ersten Subsatz (12) zumindest teilweise überlagerten Anordnung bewirkt wird.

17. Computerprogrammprodukt nach Anspruch 12 zur Verwendung auf einem elektronischen Handgerät.

## Revendications

1. Système de traitement de données destiné à sélectionner un objet à partir d'un ensemble d'objets, dans lequel :
- le système comprend des moyens d'affichage et des moyens de saisie ;
- les moyens d'affichage sont opérationnels pour afficher un premier sous-ensemble (12) des objets ;
- les moyens de saisie sont opérationnels pour déterminer une position d'un pointeur par rapport au premier sous-ensemble des objets, pour, de façon dépendante de la position, faire en sorte que les moyens d'affichage affichent un second sous-ensemble (13) des objets qui correspond à la position du pointeur et qui représente un sous-ensemble d'objets du premier sous-ensemble ; et
- les moyens de saisie permettent de déplacer le pointeur pour sélectionner un objet spécifique (12a) du premier sous-ensemble et/ou pour sélectionner un objet particulier (13a) du second sous-ensemble des objets,
- le pointeur est mobile sur les moyens d'affichage par rapport au premier sous-ensemble (12) des objets et les moyens d'affichage sont opérationnels pour afficher le second sous-ensemble (13) des objets entourant l'objet spécifique (12a) du premier sous-ensemble des objets qui correspond à la position du pointeur, dans lequel lesdits moyens d'affichage sont opérationnels pour afficher au moins un objet du premier sous-ensemble des objets (12) lorsqu'ils affichent le second sous-ensemble (13) des objets.

2. Système selon la revendication 1, dans lequel lesdits moyens de saisie sont opérationnels pour permettre un mouvement inverse du pointeur à partir d'un objet actuellement sélectionné jusqu'à une position antérieure de pointeur pour annuler une sélection réalisée.

3. Système selon la revendication 1, dans lequel l'ensemble d'objets comprend une collection de caractères graphiques.

4. Système selon la revendication 3, dans lequel les caractères graphiques comprennent des caractères alphabétiques, et dans lequel :
- le système comprend des moyens de stockage de dictionnaire destinés à stocker une pluralité de mots candidats ;
- le système comprend des moyens de récupération destinés à récupérer un sous-ensemble des mots candidats à partir des moyens de stockage de dictionnaire sur la base d'un objet particulier des caractères alphabétiques sélectionnés en dernier ou du caractère alphabétique particulier sélectionné en dernier et au moins un caractère alphabétique supplémentaire des caractères alphabétiques sélectionnés auparavant ;
- les moyens d'affichage sont opérationnels pour afficher ledit sous-ensemble (15) des mots candidats qui sont sélectionnables individuellement et entourent le caractère alphabétique (13a) sélectionné en dernier ;
- les moyens de saisie sont opérationnels pour permettre le mouvement du pointeur jusqu'à l'un quelconque de la pluralité supplémentaire des mots candidats pour sélectionner un mot candidat spécifique (15a) parmi ceux-ci.

5. Système selon la revendication 1, dans lequel les moyens d'affichage affichent le second sous-ensemble (13) dans un agencement recouvrant au moins partiellement le premier sous-ensemble (12).

6. Dispositif électronique de poche comprenant un système selon une quelconque des revendications 1 à 5.

7. Procédé de sélection d'un objet à partir d'un ensemble d'objets, à l'aide de moyens d'affichage opérationnels pour afficher un premier sous-ensemble des objets, le procédé comprenant les étapes consistant à :
- déterminer une position d'un pointeur par rapport au premier sous-ensemble (12) des objets ;
- de façon dépendante de la position, faire en sorte que les moyens d'affichage affichent un second sous-ensemble (13) des objets qui correspond à la position du pointeur et qui représente un sous-ensemble d'objets du premier sous-ensemble ; et
- permettre le mouvement du pointeur pour sélectionner un objet spécifique (12a) du premier sous-ensemble et/ou pour sélectionner un objet particulier du second sous-ensemble des objets
dans lequel le pointeur est mobile sur les moyens d'affichage par rapport au premier sous-ensemble (12) des objets et il est fait en sorte que les moyens d'affichage affichent le second sous-ensemble (13) des objets entourant l'objet spécifique (12a) du premier sous-ensemble des objets qui correspond à la position du pointeur, dans lequel lesdits moyens d'affichage affichent au moins un objet du premier sous-ensemble des objets (12) lorsqu'ils affichent le second sous-ensemble (13) des objets.

8. Procédé selon la revendication 7, dans lequel l'étape consistant à permettre le mouvement du pointeur permet en outre un mouvement inverse du pointeur à partir d'un objet actuellement sélectionné jusqu'à une position antérieure de pointeur pour annuler une sélection réalisée.

9. Procédé selon la revendication 7, dans lequel l'ensemble d'objets comprend une collection de caractères graphiques.

10. Procédé selon la revendication 7, dans lequel les caractères graphiques comprennent des caractères alphabétiques, et dans lequel le procédé comprend les étapes consistant à :
- avoir à disponibilité une pluralité de mots candidats stockés dans des moyens de stockage de dictionnaire ;
- récupérer un sous-ensemble des mots candidats sur la base d'un objet particulier des caractères alphabétiques sélectionnés en dernier ou du caractère alphabétique particulier sélectionné en dernier et au moins un caractère alphabétique supplémentaire des caractères alphabétiques sélectionnés auparavant ;
- faire afficher une pluralité (15) des mots candidats qui sont sélectionnables individuellement et centrés sur le caractère alphabétique (13a) sélectionné en dernier ; et
- permettre le mouvement du pointeur jusqu'à l'un quelconque dudit sous-ensemble des mots candidats pour sélectionner un mot candidat spécifique (15a) parmi ceux-ci.

11. Procédé selon la revendication 7, comprenant l'étape consistant à faire afficher le second sous-ensemble (13) dans un agencement recouvrant au moins partiellement le premier sous-ensemble (12).

12. Produit de programme informatique comprenant un code logiciel pour implémenter, sur un système de traitement de données, un procédé de sélection d'un objet à partir d'un ensemble d'objets, à l'aide de moyens d'affichage opérationnels pour afficher un premier sous-ensemble (12) des objets, le code logiciel étant opérationnel pour :
- déterminer une position d'un pointeur par rapport au premier sous-ensemble (12) des objets ;
- de façon dépendante de la position, faire en sorte que les moyens d'affichage affichent un second sous-ensemble (13) des objets qui correspond à la position du pointeur et qui représente un sous-ensemble d'objets du premier sous-ensemble ; et
- permettre le mouvement du pointeur pour sélectionner un objet spécifique (12a) du premier sous-ensemble et/ou pour sélectionner un objet particulier (13a) du second sous-ensemble des objets
dans lequel le pointeur est mobile sur les moyens d'affichage par rapport au premier sous-ensemble (12) des objets et le code logiciel est opérationnel pour faire en sorte que les moyens d'affichage pour afficher le second sous-ensemble (13) des objets entourant l'objet spécifique (12a) du premier sous-ensemble des objets qui correspond à la position du pointeur, dans lequel le code logiciel est opérationnel pour faire en sorte que les moyens d'affichage affichent au moins un objet du premier sous-ensemble des objets (12) lorsqu'ils affichent le second sous-ensemble (13) des objets.

13. Produit de programme informatique selon la revendication 12, dans lequel le code logiciel est opérationnel pour permettre un mouvement inverse du pointeur à partir d'un objet actuellement sélectionné jusqu'à une position antérieure de pointeur pour annuler une sélection réalisée.

14. Produit de programme informatique selon la revendication 12, dans lequel l'ensemble d'objets comprend une collection de caractères graphiques.

15. Produit de programme informatique selon la revendication 14, dans lequel les caractères graphiques comprennent des caractères alphabétiques, et dans lequel le code logiciel est opérationnel pour :
- avoir accès à une pluralité de mots candidats stockés dans des moyens de stockage de dictionnaire ;
- récupérer un sous-ensemble des mots candidats sur la base d'un objet particulier des caractères alphabétiques sélectionnés en dernier ou du caractère alphabétique particulier sélectionné en dernier et au moins un caractère alphabétique supplémentaire des caractères alphabétiques sélectionnés auparavant ;
- faire afficher ledit sous-ensemble des mots candidats (15) qui sont sélectionnables individuellement et entourent le caractère alphabétique (13a) sélectionné en dernier ; et
- permettre le mouvement du pointeur jusqu'à l'un quelconque de la pluralité des mots candidats pour sélectionner un mot candidat spécifique (15a) parmi ceux-ci.

16. Produit de programme informatique selon la revendication 12, opérationnel pour faire afficher le second sous-ensemble (13) dans un agencement recouvrant au moins partiellement le premier sous-ensemble (12).

17. Produit de programme informatique selon la revendication 12 destiné à être utilisé sur un dispositif électronique de poche.
